Europäisches Patentamt

European Patent Office

Office européen des brevets

(11) Numéro de publication : **0 018 874**
**B1**

(12) FASCICULE DE BREVET EUROPÉEN

(45) Date de publication du fascicule du brevet :
28.12.83

(51) Int. Cl.³ : **G 02 B   5/20**

(21) Numéro de dépôt : **80400490.1**

(22) Date de dépôt : **14.04.80**

(54) **Système récepteur optoélectrique multispectral à haute dynamique.**

(30) Priorité : **02.05.79 FR 7911021**

(43) Date de publication de la demande :
**12.11.80 Bulletin 80/23**

(45) Mention de la délivrance du brevet :
**28.12.83 Bulletin 83/52**

(84) Etats contractants désignés :
**DE GB IT NL SE**

(56) Documents cités :
**DE-A- 1 915 048**
**FR-A- 2 089 058**
**FR-A- 2 099 614**
**GB-A- 1 054 848**
**GB-A- 1 132 660**

(73) Titulaire : **THOMSON-CSF**
**173, Boulevard Haussmann**
**F-75379 Paris Cedex 08 (FR)**

(72) Inventeur : **Lepeytre, Jean-Paul**
**"THOMSON-CSF"-SCPI 173, bld Haussmann**
**F-75360 Paris Cedex 08 (FR)**
Inventeur : **Rouchon, Jean-Marc**
**"THOMSON-CSF"-SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

## Système récepteur optoélectrique multispectral à haute dynamique

La présente invention concerne un système récepteur optoélectrique multispectral à haute dynamique.

De nombreux systèmes récepteurs comportent un dispositif transducteur optoélectrique de dynamique limitée ; c'est le cas notamment pour le tube d'une caméra de télévision. Il est par suite nécessaire d'introduire dans la partie optique, des moyens permettant d'accroître la dynamique, ce qui revient à dire que le système est apte à fonctionner dans les gammes d'éclairement de scène plus importantes.

Un objet de l'invention est de réaliser un système récepteur optoélectrique permettant d'une part, de maintenir l'éclairement au niveau du transducteur constant ou variant dans la plage limitée répondant aux caractéristiques de fonctionnement du transducteur, tandis que l'éclairement de scène est susceptible de varier dans une très large gamme et d'autre part, de sélectionner à gré différentes bandes spectrales prédéterminées pour l'observation de la scène.

Dans les systèmes optiques, les moyens assurant la sélection de bandes spectrales sont généralement dissociés de ceux assurant l'accroissement de la dynamique. L'éclairement au niveau du plan de photoréception est inversement proportionnel au carré de l'ouverture photométrique T du système : $T = F/\sqrt{\tau}$ avec F ouverture géométrique et $\tau$ transmission de l'optique. On peut donc agir sur l'ouverture géométrique ou sur la transmission pour augmenter la dynamique. Si l'accroissement de dynamique à obtenir est important, par exemple un rapport 1 à 1 000 au lieu de 1 à 10 présenté par un tube de prise de vue de télévision, l'action sur l'ouverture géométrique par interposition d'un diaphragme réglable n'est guère intéressante, étant donné la dégradation de la qualité de l'image par les phénomènes de diffraction. La solution préférée préservant la qualité de l'image consiste à agir sur la transmission optique $\tau$ du système. Un coin photométrique peut être disposé sur le trajet optique ; le déplacement du coin permet de faire varier le coefficient de transmission $\tau$. Une autre façon de procéder est d'utiliser un moyen équivalent, consistant en un atténuateur dégradé qui se définit par un support transparent recouvert de couches minces, produisant une variation continue de densité. Cette variation peut être rectiligne, angulaire, radiale et elle est faite pour correspondre à une loi prédéterminée.

Le changement de bande spectrale peut s'effectuer par commutation mécanique de filtres optiques interposés sur le chemin optique. Un filtre optique est obtenu par une lame en matériau déterminé ou par dépôt de couches minces sur un support transparent.

Il est connu de réaliser un atténuateur dégradé, notamment angulaire c'est-à-dire dont la variation de densité s'effectue angulairement, les couches minces formant la densité variable étant déposées le long d'une couronne circulaire sur un disque support en verre ou autre matériau transparent. L'atténuation optique est rendue variable par rotation du disque, la couronne de densité variable interceptant le rayonnement sur le trajet optique. La publication de brevet FR-A-2 089 058 décrit un appareil densitomètre qui utilise un atténuateur dégradé de ce type. L'appareil comporte aussi, réalisé sur un support distinct, un filtre coloré réglable en position et interchangeable pour changer la bande de filtrage désirée pour l'exploitation. La fonction uniforme d'atténuation est produite une seule fois sur le disque qui tourne dans un sens désiré pour l'exploitation, par exemple celui de densité décroissante.

Un but de l'invention est de combiner ces techniques pour réaliser avantageusement sur un même support la fonction de filtrage multispectral et la fonction d'atténuation optique variable.

Un autre but de l'invention est d'assurer la protection du récepteur photoélectrique lors d'un changement de bande spectrale.

Ces buts sont atteints par le système récepteur défini dans la revendication 1.

Les particularités et avantages de la présente invention sont mis en évidence à l'aide de la description qui suit et des figures annexées qui représentent :

la figure 1, un schéma général d'un système récepteur optoélectrique conforme à l'invention ;

les figures 2a, 2b et 2c, un exemple de réalisation du dispositif atténuateur et filtre utilisé selon l'invention ;

la figure 3, un diagramme d'un exemple de réalisation d'un système selon la figure 1 ;

la figure 4, des courbes de réponse d'éléments et circuits faisant partie du montage selon la figure 3 ; et

la figure 5, des formes d'ondes de signaux caractéristiques relatifs au fonctionnement du montage selon la figure 3.

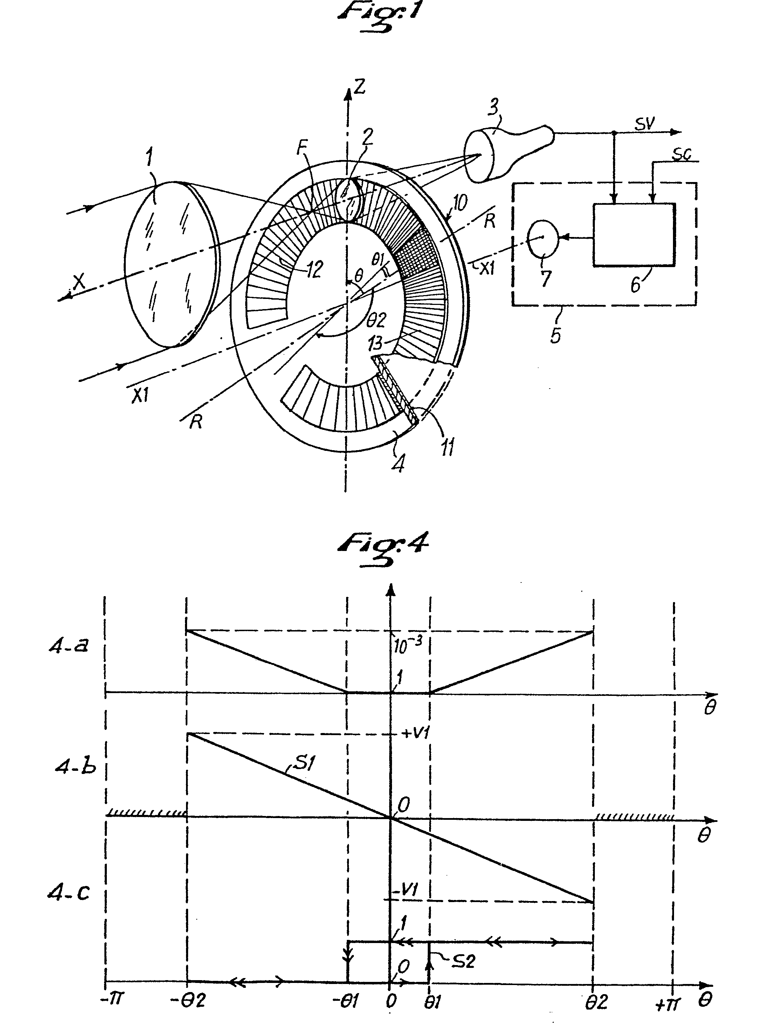

Suivant le schéma simplifié de la figure 1, le système comporte des moyens optiques symbolisés par deux lentilles 1-2, un transducteur optoélectrique 3 tel, par exemple, un tube vidicon d'une caméra de prise de vue de télévision, et des moyens d'atténuation et de filtrage optique réalisés sur un même support, par exemple sur un disque tournant 4, l'atténuateur étant dans ce cas du type atténuateur dégradé angulaire.

Un dispositif annexe 5 commande le positionnement angulaire du disque 4 pour obtenir l'atténuation désirée. Le but à atteindre étant généralement le maintien d'un éclairement variant dans une plage limitée au niveau du plan photosensible du récepteur optoélectrique 3, le signal vidéo SV est en conséquence fourni au dispositif 5 pour réaliser un circuit d'asservissement 6 alimentant un servo-moteur d'entraînement 7.

Pour l'obtention d'un fonctionnement multispectral, suivant lequel le rayonnement utile parvenant au récepteur 3 peut être sélectionné parmi plusieurs bandes spectrales prédéterminées, le dispositif 4 est conçu conformément à l'invention de manière particulière. L'agencement est effectué en sorte de réaliser les différents filtres sur le même support, en associant à chacun d'eux la fonction atténuation variable par le positionnement angulaire. La commande de changement de bande de fonctionnement est symbolisée par un signal de commande SC transmis au dispositif 6.

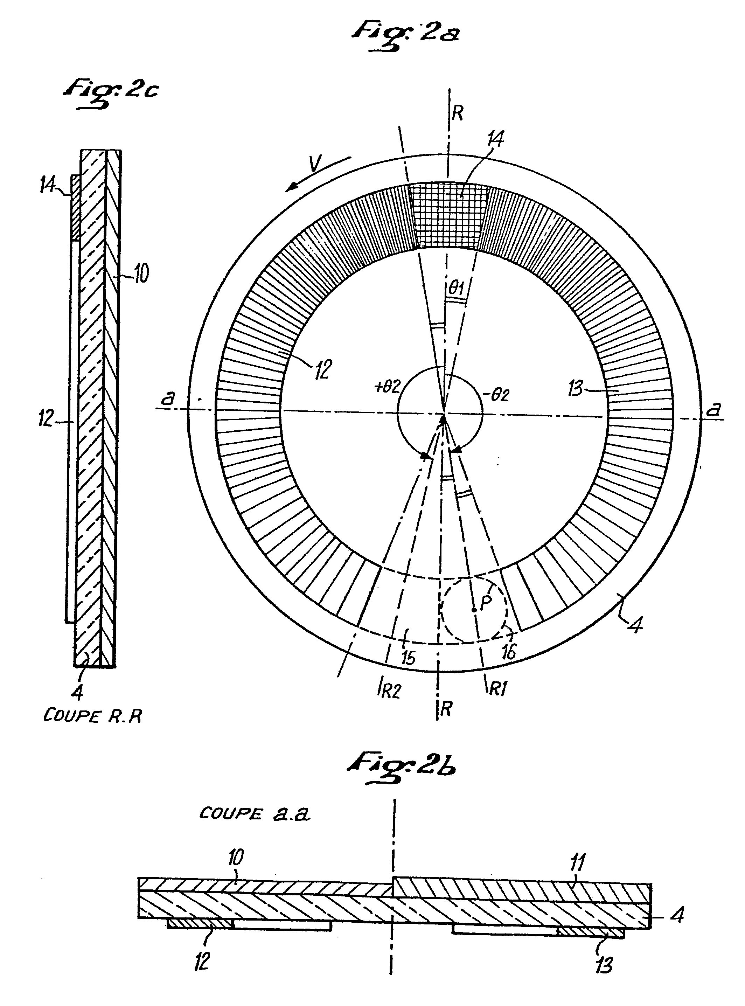

Un exemple de réalisation du dispositif atténuateur-filtre est décrit ci-après à l'aide des figures 2a, 2b et 2c.

Suivant cette réalisation, il est prévu de produire deux filtres, par exemple, un premier filtre correspondant à une bande spectrale dans le visible et un deuxième filtre correspondant à une bande spectrale dans l'infrarouge proche.

Le diamètre RR pris comme axe de référence, divise le disque en deux secteurs égaux d'angle au centre 180°. Sur un premier secteur, un dépôt 10 est effectué pour constituer un premier filtre et sur le deuxième secteur, un dépôt il constitue le deuxième filtre, comme le montre la coupe transversale médiane de la figure 2b.

A chacun de ces filtres, est associé un atténuateur dégradé angulaire, 12 et 13 respectivement, réalisé sous forme de couches minces absorbantes, déposées sur la deuxième face du verre support 4. La transmission des couches varie en fonction de la densité optique du dépôt. Les dépôts sont de très faible épaisseur, les dimensions sont exagérées sur le dessin pour la clarté de l'exposé. Le dépôt peut être réalisé en sorte que la densité optique définie par $D = -\log \tau$, varie linéairement en fonction de la position angulaire $\theta$, soit $D = k\theta$.

Les dépôts 12 et 13 sont réalisés symétriquement par rapport au diamètre de référence, de manière à ne pas surexposer la cible du récepteur optoélectrique 3 lors d'un changement de bande d'exploitation. Cette disposition permet en effet de commuter les filtres 10-11 en passant par les zones de haute densité des deux atténuateurs dégradés, sous réserve de produire une rotation de sens approprié selon la flèche V pour passer du filtre 10 au filtre 11 et de sens inverse pour passer du filtre 11 au filtre 10.

Les dépôts formant les filtres et les atténuateurs dégradés peuvent être réalisés sur une même face du disque support. Par ailleurs, les filtres peuvent être limités selon une configuration correspondant à celle de l'atténuateur, c'est-à-dire une couronne circulaire dans l'exemple considéré.

Dans la version figurée, les dépôts sont séparés et les filtres 10-11 sont d'épaisseur différente selon l'axe optique, pour corriger l'aberration chromatique qui résulterait d'un défaut de mise au point sur la cible du tube 3, lors du passage d'un filtre à l'autre.

Le cercle P représente la pupille du système optique au niveau du plan du disque, le diamètre de la pupille correspondant sensiblement à la dimension radiale de la couronne atténuatrice.

Pour produire le disque sous de faibles dimensions, l'optique est divisée en deux parties, comme représentée sur la figure 1 comportant un objectif d'entrée 1 qui focalise le rayonnement incident provenant du champ observé dans le plan focal, passant par le foyer principal F, et un deuxième objectif 2 qui reporte l'image du champ au niveau du plan de réception, ici la cible du vidicon 3 d'une caméra de prise de vue. Le disque est positionné à proximité de ce deuxième objectif dit objectif relais et peut se trouver ainsi au niveau d'une pupille de plus faible diamètre que celle de l'objectif d'entrée 1. Le positionnement de l'atténuateur dans le plan d'une pupille optique permet d'atténuer de même manière le rayonnement provenant de n'importe quel point du champ observé. Un autre intérêt présenté par ce montage est la possibilité de travailler en champ large ou champ étroit par une simple commutation d'objectif relais 2.

La figure 4a représente un exemple de loi de variation de la transmission présentée par l'atténuateur 12 ou 13, en fonction de l'angle de rotation $\theta$. La valeur $\theta = 0$ correspond à la coïncidence entre le diamètre RR et l'axe cartésien de référence Z. La zone terminale 14 de haute densité des atténuateurs est réalisée pour produire sensiblement l'obturation du faisceau, l'angle au centre $2\theta1$ correspondant est donc déterminé en fonction du diamètre de la pupille P. Inversement, les zones terminales 15 et 16 à l'autre extrémité des atténuateurs produisent une atténuation minimale correspondant à l'atténuation résiduelle due à la traversée du verre 4 et des couches filtrantes 10 ou 11 ; les zones 15 et 16 sont également dimensionnées en fonction de la pupille P. L'angle $\theta2$ (ou $-\theta2$) correspond à la course angulaire totale devant être présentée en fonctionnement pour chaque atténuateur. Dans cet exemple, $\theta2 = \pi - \theta1$. Des moyens de butée sont prévus pour limiter la course à ces valeurs, c'est-à-dire lorsque le rayon R1 (ou R2) vient se positionner selon la direction Z de référence perpendiculaire à l'axe optique X (Fig. 1). Le disque est entraîné en rotation autour d'un axe X1 parallèle à X.

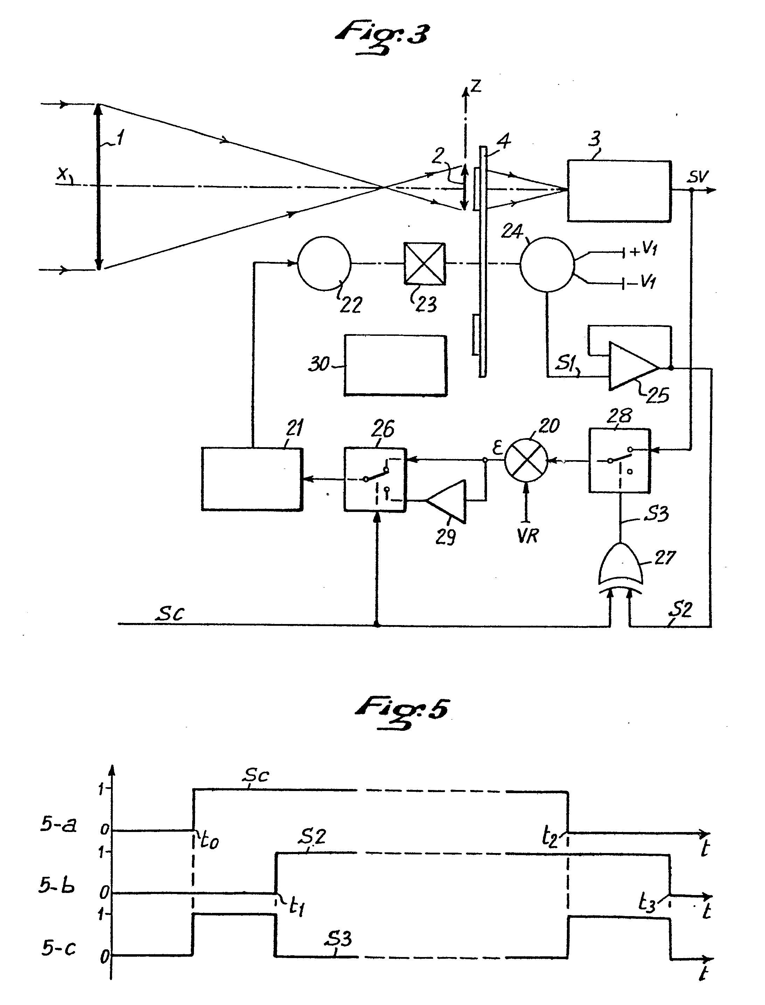

La figure 3 représente plus en détail un exemple de réalisation du dispositif de commande 5 qui comporte selon une structure conventionnelle, un circuit 20 où le signal à réguler SV est comparé à une valeur de référence VR, un amplificateur 21 de l'erreur $\varepsilon$ recueillie en sortie du comparateur différentiel 20, un servo-moteur 22 alimenté par l'amplificateur. Le moteur entraîne le disque à travers un réducteur 23. Il est entendu que le signal SV à comparer peut consister en la valeur moyenne du signal vidéo obtenu au moyen d'un circuit intégrateur non figuré. Le signal vidéo, ou sa valeur moyenne, se trouve ainsi régulé par la boucle qui contrôle le positionnement de l'atténuateur dégradé en fonction des variations d'éclairement de scène.

Les autres circuits figurés ont trait à la commutation de bande avec la condition que le disque tourne dans le sens permettant de passer par la zone de densité maximale (14, Fig. 2a) afin de ne pas aveugler le vidicon lors d'un changement de bande spectrale. Un potentiomètre de recopie 24 délivre par son curseur un signal S1, représenté sur la figure 4b, variant entre les tensions + V1 et − V1 appliquées aux bornes du potentiomètre. Un circuit comparateur à hystérésis 25 transforme le signal S1 en un signal S2 à deux états, représenté sur la figure 4c ; les changements d'état s'effectuent sensiblement pour les valeurs $\theta 1$ et $- \theta 1$ de dépassement de la zone 14 de densité maximale, selon le changement de spectre considéré. Le signal de commande SC de forme binaire (Fig. 5a) est transmis directement à un premier circuit porte 26 et, à travers un circuit OU exclusif 27, à un deuxième circuit porte 28. Le signal S2 est appliqué à la seconde entrée du circuit OU 27. Les valeurs 0 et 1 du signal de commande SC correspondent respectivement à la sélection de la bande visible (filtre 11, Fig. 2b) et de la bande infrarouge (filtre 10, Fig. 2b). Les formes d'ondes de la figure 4 représentent à gauche le cas de commutation IR-visible et à droite le cas inverse visible − IR. A l'instant $t_0$ d'application du signal SC de changement de bande, le fonctionnement étant dans l'infrarouge, les circuits portes 26 et 28 basculent ce qui a pour effet de déconnecter l'entrée SV au comparateur 20 qui délivre le signal VR. Les atténuateurs 12 et 13 étant symétriques par rapport au diamètre RR, le sens de rotation du disque doit être inversé, ce qui est obtenu par le circuit inverseur 29 de gain unité. Après dépassement de la zone 14, le signal S2 change de valeur (Fig. 5b) ainsi que la sortie S3 du circuit OU 27 à l'instant $t_1$. Consécutivement le circuit porte 28 revient à l'état initial et l'asservissement se produit avec le sens de rotation désiré. Inversement, pour une commutation visible − IR à l'instant $t_2$, le circuit porte 26 revient à l'état indiqué sur la figure et le circuit porte 28 est actionné comme précédemment, le signal VR récupéré en sortie du comparateur 20 est appliqué directement à l'amplificateur 21. Après changement d'état du signal S2, le circuit porte 28 revient à l'état initial figuré.

Le bloc 30 sur la figure 3 symbolise des moyens accessoires formant butée de fin de course pour limiter l'amplitude maximale de la rotation du disque à la valeur angulaire $\theta 2$ définie précédemment et éviter le passage dans l'autre secteur filtrant. Ces moyens peuvent être aisément réalisés et de diverses manières, en se basant sur différentes techniques connues faisant partie du savoir-faire. Ainsi par exemple l'arrivée en butée peut être agencée de manière à agir sur le gain de l'alimentation 21 du moteur d'entraînement, une action inverse étant déclenchée pour sortir de butée lorsque le signal vidéo varie à nouveau dans le sens croissant.

Il est entendu que le système décrit admet de nombreuses variantes conformes aux caractéristiques de l'invention ; notamment l'atténuateur dégradé peut être de forme linéaire et répété plus de deux fois avec des filtres associés pour travailler dans autant de bandes spectrales distinctes.

Suivant cette dernière configuration, les commutations de filtre ne peuvent être produites en passant à chaque fois par les zones de densité maximum et les atténuateurs dégradés pourront être répétés successivement de même façon selon le sens de déplacement et un dispositif obturateur annexe pourra être adjoint et commandé pour protéger le tube durant la commutation de filtre.

**Revendications**

1. Système récepteur optoélectronique multispectral présentant une haute dynamique relative à l'intensité lumineuse reçue, comportant des moyens optiques de réception et de focalisation du rayonnement lumineux pour former l'image du champ observé sur un dispositif transducteur optoélectrique (3), les moyens optiques étant dotés d'un filtre (10, 11) sélecteur de bande spectrale ainsi que d'un filtre (12, 13) atténuateur d'intensité lumineuse dégradé en densité et dont la position est commandée par un dispositif annexe, caractérisé par le fait que le filtre sélecteur de la bande spectrale est constitué de plusieurs filtres élémentaires distincts (10, 11) déposés sur un support (4), chaque filtre élémentaire sélectionnant une bande spectrale particulière, et que le filtre atténuateur (12, 13) d'intensité lumineuse est constitué d'autant de filtres atténuateurs élémentaires identiques déposés sur le même support (4), chaque filtre atténuateur élémentaire étant associé à un filtre élémentaire sélecteur de bande de façon à ce que chaque filtre élémentaire sélecteur de bande présente une même loi de variation d'atténuation en fonction de sa position.

2. Système selon la revendication 1, caractérisé en ce qu'il comporte deux filtres atténuateurs élémentaires (12, 13) déposés successivement sur le support et en sorte que le sens de variation de l'atténuation se trouve inversé de l'un au suivant.

3. Système selon la revendication 2, caractérisé en ce que les moyens de sélection de bande et d'atténuation sont portés par un disque (4) entraîné en rotation par le dispositif annexe (5), le disque portant un dépôt atténuateur reproduit symétriquement par rapport à un diamètre de référence (RR) et localisé selon une couronne circulaire, les deux secteurs d'angle au centre 180° formés par le diamètre de référence constituant deux filtres optiques de bande spectrales distinctes.

4. Système selon l'une quelconque des revendications 1 à 3, caractérisé en ce que les moyens optiques de réception et de focalisation comportent un objectif de focalisation (1) suivi d'un objectif de reprise d'image (2) qui reporte l'image focalisée sur le plan de photodétection du transducteur (3), en sorte de produire les moyens de sélection de bande et d'atténuation sous de faibles dimensions, ces moyens étant positionnés au niveau de l'objectif de reprise d'image.

5. Système selon l'une quelconque des revendications 1 à 4, caractérisé en ce que le transducteur est constitué par un tube de prise de vue de télévision et que le signal vidéo produit est appliqué au dispositif de commande annexe pour réaliser un asservissement de position en fonction de la valeur du signal vidéo.

6. Système selon l'ensemble des revendications 3, 4 et 5, caractérisé en ce que le dispositif de commande comporte des moyens de commande en rotation du disque selon un sens inversé (28) lors d'un changement de filtre optique, déclenchés par réception d'un ordre extérieur correspondant (SC), en sorte de passer par les zones d'atténuation de densité maximale durant cette opération.

7. Système selon la revendication 6, caractérisé en ce que les moyens de commande en rotation selon un sens inversé, comportent un potentiomètre de recopie (24) entraîné par le disque et dont le signal curseur (S1) alimente un circuit comparateur à hystérésis (25).

8. Système selon la revendication 6 ou 7, caractérisé en ce que le dispositif de commande comporte en outre des moyens de butée mécanique (30) pour limiter la course du disque respectivement dans les zones de densité minimale et éviter le passage dans l'autre secteur filtrant.

## Claims

1. A multispectral optoelectronic receiver system having a high dynamic of the received light intensity and incorporating optical means for the reception and focusing of light radiation to form an image of the observed field on an optoelectric transducer (3), said optical means being provided with a band selection filter (10, 11) and with a light intensity attenuation filter (12, 13) which is graduaded in density and which is position-controlled by an attached device, characterized in that the band selection filter is formed of several separate elementary filters (10, 11) carried on a support (4), each elementary filter selecting one particular spectrum band, and that the attenuation filter (12, 13) for damping the light intensity is formed of as many identical elementary attenuation filters which are carried by the same support (4), each elementary attenuation filter being associated to an elementary band selection filter in such a way that each elementary band selection filter has the same attenuation variation law as a function of the position.

2. A system according to claim 1, characterized in that it comprises two elementary attenuation filters (12, 13) arranged successively on the support and in such a way that the variation direction of the attenuation is inversed from one with respect to the other.

3. A system according to claim 2, characterized in that the band selection and attenuation means are carried on a disc (4) rotated by the attached device (5), the disc carrying an attenuator deposit which is symmetrically reproduced with respect to a reference diameter (RR) and arranged in accordance with a circular ring, the two sectors of a 180° center angle formed by the reference diameter constituting two optical filters of separate spectral bands.

4. A system according to any one of claims 1 to 3, characterized in that the optical reception and focusing means comprise a focusing objective (1) followed by an image relay objective (2) which transfers the focused image on the photo-detection plane of the transducer (3) in such a way as to produce the attenuation and band selection means with small dimensions, said means being positioned at the level of the image relay objective.

5. A system according to any one of claims 1 to 4, characterized in that the transducer is a television camera tube and the video signal produced is applied to the attached control device to bring about a position servo-control as a function of the video signal value.

6. A system according to the set of claims 3, 4 and 5, characterized in that the control device incorporates means for controlling the rotation of the disc in an opposite direction (28) during a change of the optical filter, these means being triggered by the reception of a corresponding order from outside (SC) in such a way as to pass through maximum density attenuation zones during this operation.

7. A system according to claim 6, characterized in that the means for controlling the rotation in opposite direction incorporate a copy potentiometer (24) driven by the disc and whose wiper signal (S1) supplies a hysteresis comparator circuit (25).

8. A system according to claim 6 or 7, characterized in that the control device also incorporates mechanical abutment means (30) to limit the travel of the disc in the minimum density areas and to avoid the passage into the other filtering sector.

## Ansprüche

1. Multispektrales optoelektronisches Empfangssystem großer Dynamik bezüglich der Energie des empfangenen Lichts, mit optischen Empfangs- und Sammelmitteln für die Lichtstrahlung, die das Bild des Beobachtungsfelds auf einer optoelektrischen Wandlervorrichtung (3) bilden und ein Filter (10, 11) für die Auswahl eines Spektralbandes sowie ein Filter (12, 13) aufweisen, mit dem die Lichtenergiedichte stufenweise gedämpft werden kann und dessen Stellung von einer Nebenvorrichtung gesteuert wird, dadurch gekennzeichnet, daß das Filter für die Auswahl eines Spektralbandes aus mehreren getrennten Elementarfiltern (10, 11) besteht, die auf einem Träger angeordnet sind und je ein bestimmtes Spektralband auswählen, und daß das Dämpfungsfilter (12, 13) aus ebensovielen einander gleichen Elementardämpfungsfilter besteht, die auf demselben Träger (4) angeordnet sind, wobei jedes Elementardämpfungsfilter einem Elementarfilter für die Spektralbandauswahl zugeordnet ist, derart, daß jedes Elementarfilter für die Spektralbandauswahl eine gleiche Funktion der Dämpfung in Abhängigkeit von seiner Stellung besitzt.

2. System nach Anspruch 1, dadurch gekennzeichnet, daß es zwei Elementardämpfungsfilter (12, 13) aufweist, die nacheinander auf den Träger aufgebracht sind und derart, daß die Richtung der Dämpfungsänderung von einem Filter entgegengesetzt zu der des anderen Filters verläuft.

3. System nach Anspruch 2, dadurch gekennzeichnet, daß die Mittel zur Auswahl eines Spektralbandes und zur Dämpfung von einer Scheibe (4) getragen werden, die von der Nebenvorrichtung (5) in Drehung versetzt wird, wobei die Scheibe eine Dämpfungsschicht trägt, die symmetrisch bezüglich eines Bezugsdurchmessers (RR) wiedergegeben ist und gemäß einer ringförmigen Krone lokalisiert ist und wobei die beiden Sektoren mit einem Zentrumswinkel von je 180°, die vom Bezugsdurchmesser gebildet werden, zwei optische Filter unterschiedlicher Spektralbänder darstellen.

4. System nach einem der Ansprüche 1 bis 3, dadurch gekennzeichnet, daß die optischen Empfangs- und Sammelmittel ein Sammelobjektiv (1), gefolgt von einem Bildobjektiv (2) aufweisen, das das fokalisierte Bild auf die lichtempfindliche Ebene des Wandlers (3) übermittelt derart, daß die Mittel zur Bandauswahl und zur Dämpfung kleine Abmessungen besitzen und in Höhe des Bildobjektivs angeordnet sind.

5. System nach einem der Ansprüche 1 bis 4, dadurch gekennzeichnet, daß der Wandler aus einer Fernsehbildaufnahmeröhre besteht und das erzeugte Videosignal der steuernden Nebenvorrichtung zugeführt wird, um eine Stellungsregelung abhängig vom Wert des Videosignals zu bewirken.

6. System nach der Gesamtheit der Ansprüche 3 bis 5, dadurch gekennzeichnet, daß die Steuervorrichtung Steuermittel für die Umkehr der Drehrichtung der Scheibe (28) bei einem Wechsel des optischen Filters aufweist, die durch Empfang eines entsprechenden Befehls von außen (SC) ausgelöst werden, so daß die Scheibe durch die Dämpfungszone größter Dichte während dieser Operation läuft.

7. System nach Anspruch 6, dadurch gekennzeichnet, daß die Steuermittel für die Umkehr der Drehrichtung ein von der Scheibe nachgeführtes Potentiometer (24) aufweisen, dessen Läufersignal (S1) einem Komparatorschaltkreis (25) mit Hysterese zugeführt wird.

8. System nach Anspruch 6 oder 7, dadurch gekennzeichnet, daß die Steuervorrichtung außerdem mechanische Anschlagmittel (30) für die Begrenzung des Scheibenlaufs jeweils in den Zonen geringster Dichte und zur Verhinderung des Übergangs in den anderen Filtersektor aufweisen.

0 018 874

*Fig. 1*

*Fig. 4*

Fig. 2a

Fig. 2c

COUPE R.R

Fig. 2b

COUPE a.a

Fig. 3

Fig. 5